# EUROPEAN PATENT APPLICATION

(11) **EP 3 104 269 A1**
(43) Date of publication of application: **14.12.2016**
(21) Application number: 16164512.2
(22) Date of filing: 08.04.2016
(51) Int. Cl.: G06F 3/14, G06Q 30/02, G08G 1/017, G07C 5/08

(54) **METHOD OF SHARING BLACK BOX IMAGE BASED ON LOCATION INFORMATION AND TERMINAL USING THE SAME**

(30) Priority: 12.06.2015 KR 20150083475
(71) Applicant: LG Electronics Inc., Seoul 07336 (KR)
(72) Inventor: CHO, Taehoon, 06772 SEOUL (KR); SEOL, Jie, 06772 SEOUL (KR)
(74) Representative: Cabinet Plasseraud

(57) **Abstract**

Disclosed is a controlling method of sharing a black box image more effectively based on location information and a time information and terminal for the same. The present invention includes a wireless communication unit configured to transceive data with an external terminal, a camera, a user input unit configured to output a notification, a memory configured to save an image taken through the camera with a log information, and a controller receiving an image sharing request from the external terminal through the wireless communication unit, the controller, if there is the log information corresponding to the received image sharing request, outputting the notification for the image sharing request through the user output unit.

## Description

This application claims the benefit of earlier filing date and right of priority to Korean Application No. 10-2015-0083475, filed on June 12, 2015, the contents of which are hereby incorporated by reference herein in their entirety.

### BACKGROUND OF THE INVENTION

### Field of the Invention

The present invention relates to a method of sharing a black box image, and more particularly, to a controlling method of sharing a black box image and terminal using the same. Although the present invention is suitable for a wide scope of applications, it is particularly suitable for sharing a black box image with another terminal based on location information.

### Discussion of the Related Art

Generally, a device installed in a parked or driven car to take images is called a black box device. As a legal evidence for a car damage or a traffic accident, a black box image or video taken by the black box device is usable. Recently, as black box devices are popularly used, black box images are used for preventions/investigations of car crimes or crimes of other types.

Since a black box image plays a role more important that witness's statement in determining a circumstantial evidence of an accident, it is necessary to secure a black box image of a witness car as well as a black box image of an accident car.

Although there are many black box images of witness cars having videotaped circumstances of an accident, it is unable to check whether the accident circumstances are videotaped unless an owner of the corresponding black box image checks a corresponding footage. Particularly, in case of a black box image of a parked/stopped car, if an owner of the black box image was absent from the scene of the accident, the owner is unable to know whether the corresponding black box image was taken.

Moreover, regarding the black box image of the witness car, it is inconvenient for an owner of the corresponding black box image to share the image voluntarily. Particularly, since most of black boxes fail to be equipped with wireless communication functionality, many image owners may not be cooperatively share the black box images in a manner of checking and sending a black box image saved in a memory by connecting to a computer physically.

Due to these reasons, it is difficult to secure the necessary images.

Thus, the demand for researching & developing a controlling method for sharing a black box image more easily and effectively is increasingly rising.

### SUMMARY OF THE INVENTION

Accordingly, embodiments of the present invention are directed to a terminal and controlling method thereof that substantially obviate one or more problems due to limitations and disadvantages of the related art.

One object of the present invention is to provide a terminal and controlling method thereof, by which an image taken in a prescribed radius from a desired point can be shared.

Another object of the present invention is to provide a terminal and controlling method thereof, by which a terminal provided with a shared black box image can be charged for the shared black box image.

Additional advantages, objects, and features of the invention will be set forth in the disclosure herein as well as the accompanying drawings. Such aspects may also be appreciated by those skilled in the art based on the disclosure herein.

To achieve these objects and other advantages and in accordance with the purpose of the invention, as embodied and broadly described herein, a terminal according to one embodiment of the present invention may include a wireless communication unit configured to transceive data with an external terminal, a camera, a user input unit configured to output a notification, a memory configured to save an image taken through the camera with a log information, and a controller receiving an image sharing request from the external terminal through the wireless communication unit, the controller, if there is the log information corresponding to the received image sharing request, outputting the notification for the image sharing request through the user output unit.

In another aspect of the present invention, as embodied and broadly described herein, a terminal according to another embodiment of the present invention may include a touchscreen, a wireless communication unit configured to transceive data with an external terminal, a user input unit configured to set a place and a time, and a controller, if the place and the time are set through the user input unit, sending a signal of an image search request corresponding to the set place and the set time to at least one external terminal, the controller outputting an image search result returned by the at least one external terminal to the touchscreen in response to the image search request signal.

In further aspect of the present invention, as embodied and broadly described herein, a method of controlling a terminal according to another embodiment of the present invention may include the steps of saving an image taken through a camera with a log information, receiving an image sharing request from an external terminal through a wireless communication unit, and if there is the log information corresponding to the received image sharing request, outputting a notification for the image sharing request through a user output unit.

In another further aspect of the present invention, as embodied and broadly described herein, a method of controlling a terminal according to another embodiment of the present invention may include the steps of setting a place and a time through a user input unit, if the place and the time are set through the user input unit, sending a signal of an image search request corresponding to the set place and the set time to at least one external terminal, and outputting an image search result returned by the at least one external terminal to the touchscreen in response to the image search request signal.

Accordingly, embodiments of the present invention provide various effects and/or features.

According to at least one of embodiments of the present invention, it is able to check whether a black box image for a desired place or scene exists.

According to at least one of embodiments of the present invention, the sharing of a black box image for a desired place or scene between sharers is facilitated.

According to at least one of embodiments of the present invention, since a person provided with a shared black box image can be charged for the shared black box image, the black box image sharing can be popularized.

Effects obtainable from the present invention may be non-limited by the above mentioned effect. And, other unmentioned effects can be clearly understood from the following description by those having ordinary skill in the technical field to which the present invention pertains.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. The above and other aspects, features, and advantages of the present invention will become more apparent upon consideration of the following description of preferred embodiments, taken in conjunction with the accompanying drawing figures. In the drawings:
FIG. 1A is a block diagram to describe a mobile terminal related to the present invention;
FIG. 1B and FIG. 1C are conceptual diagrams for one example of a mobile terminal related to the present invention in different views, respectively;
FIG. 2 is a flowchart for a controlling method of sharing a log information using an application in an image sharer side terminal (hereinafter named a sharing terminal) according to one embodiment of the present invention;
FIG. 3 is a diagram for one example of a notification of an image sharing request for an image outputted from a sharing terminal according to one embodiment of the present invention;
FIG. 4 is a diagram for a controlling method of setting a price of an image transmission through an outputted chat window according to one embodiment of the present invention;
FIG. 5 is a diagram to describe an image transmitting option controlling state according to one embodiment of the present invention;
FIG. 6 is a diagram for a controlling method of restricting a view of a black box image taken in a specific shadow area according to one embodiment of the present invention;
FIG. 7 is a diagram for a controlling method of uploading a black box image to an SNS server according to one embodiment of the present invention;
FIG. 8 is a state diagram for a controlling method of differently setting an uploading timing point in accordance of a wireless communication condition according to one embodiment of the present invention;
FIG. 9 is a state diagram for a controlling method of a requesting terminal 100B automatically receiving a download of a black box image uploaded to an SNS server according to one embodiment of the present invention;
FIG. 10 is a flowchart for a controlling method of automatically uploading a black box image to a prescribed server in case of detecting an impact on a car according to one embodiment of the present invention;
FIG. 11 is a diagram of a controlling method for a requesting terminal 100B to make a request for a black box image to at least one sharing terminal 100A by designating a time and place according to one embodiment of the present invention; and
FIG. 12 is a conceptual diagram to describe a controlling method of determining a heading direction of a car based on location information according to one embodiment of the present invention.

### DETAILED DESCRIPTION OF THE INVENTION

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

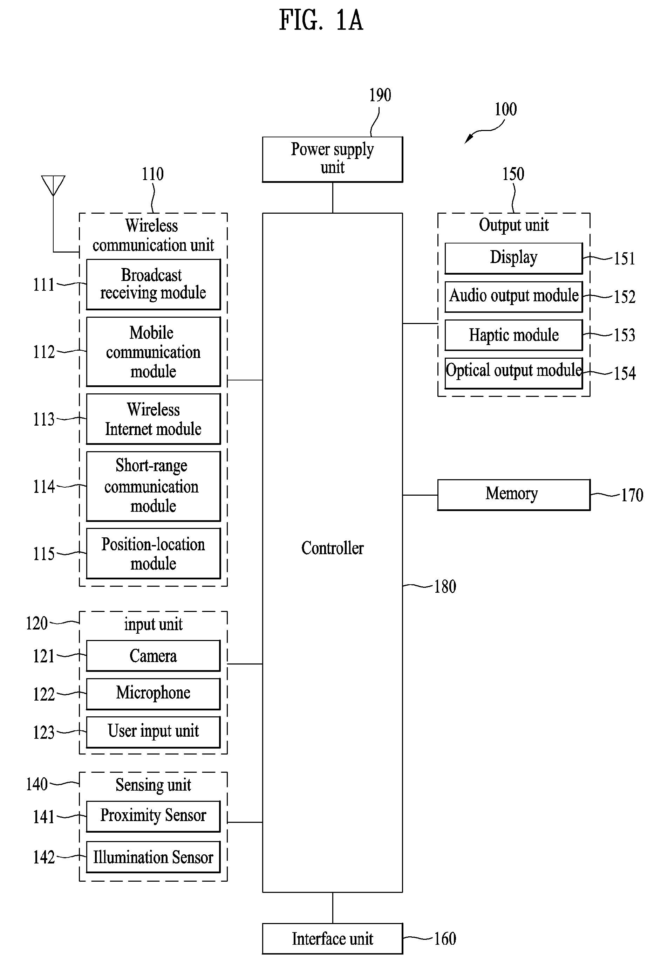

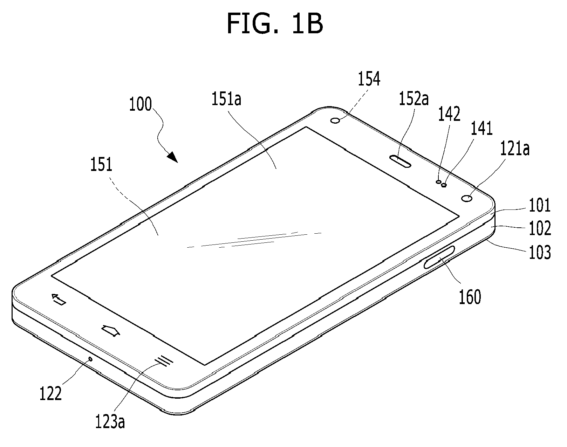

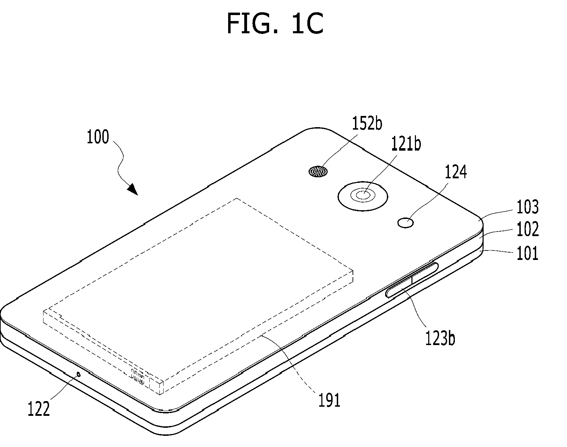

Reference is now made to FIGS. 1A-1C, where FIG. 1A is a block diagram of a mobile terminal in accordance with the present disclosure, and FIGS. 1B and 1C are conceptual views of one example of the mobile terminal, viewed from different directions.

The mobile terminal 100 is shown having components such as a wireless communication unit 110, an input unit 120, a sensing unit 140, an output unit 150, an interface unit 160, a memory 170, a controller 180, and a power supply unit 190. It is understood that implementing all of the illustrated components is not a requirement, and that greater or fewer components may alternatively be implemented. Referring now to FIG. 1A, the mobile terminal 100 is shown having wireless communication unit 110 configured with several commonly implemented components.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks.

To facilitate such communications, the wireless communication unit 110 includes one or more of a broadcast receiving module 111, a mobile communication module 112, a wireless Internet module 113, a short-range communication module 114, and a position location module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1A, the sensing unit 140 is shown having a proximity sensor 141 and an illumination sensor 142. If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154. The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 processes signals, data, informations and the like inputted or outputted through the above-mentioned components and/or runs application programs saved in the memory 170, thereby processing or providing a user with appropriate informations and/or functions.

The controller 180 may provide or process information or functions appropriate for a user by processing signals, data, information and the like, which are input or output by the various components depicted in Fig. 1A, or activating application programs stored in the memory 170. As one example, the controller 180 controls some or all of the components illustrated in FIGS. 1A according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

At least one portion of the respective components mentioned in the foregoing description can cooperatively operate to embody operations, controls or controlling methods of the mobile terminal according to various embodiments of the present invention mentioned in the following description. Moreover, the operations, controls or controlling methods of the mobile terminal can be embodied in the mobile terminal by running at least one or more application programs saved in the memory 170.

Referring still to FIG. 1A, various components depicted in this figure will now be described in more detail.

Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000(Code Division Multi Access 2000), EV-DO(Enhanced Voice-Data Optimized or Enhanced Voice-Data Only), Wideband CDMA (WCDMA), High Speed Downlink Packet access (HSDPA), HSUPA(High Speed Uplink Packet Access), Long Term Evolution (LTE), LTE-A(Long Term Evolution-Advanced), and the like).

Examples of wireless signals transmitted and/or received via the mobile communication module 112 include audio call signals, video (telephony) call signals, or various formats of data to support communication of text and multimedia messages.

The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA(High Speed Uplink Packet Access), Long Term Evolution (LTE), LTE-A(Long Term Evolution-Advanced), and the like. The wireless Internet module 113 may transmit/receive data according to one or more of such wireless Internet technologies, and other Internet technologies as well.

In some embodiments, when the wireless Internet access is implemented according to, for example, WiBro, HSDPA,HSUPA, GSM, CDMA, WCDMA, LTE, LTE-A and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB(Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

In some embodiments, another mobile terminal (which may be configured similarly to mobile terminal 100) may be a wearable device, for example, a smart watch, a smart glass or a head mounted display (HMD), which is able to exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The position-location module 115 is generally configured to detect, calculate, derive or otherwise identify a position of the mobile terminal. As an example, the position-location module 115 includes a Global Position System (GPS) module, a Wi-Fi module, or both. If desired, the position-location module 115 may alternatively or additionally function with any of the other modules of the wireless communication unit 110 to obtain data related to the position of the mobile terminal. As one example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module.

The input unit 120 may be configured to permit various types of input to the mobile terminal 100. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. In some cases, the cameras 121 may be arranged in a matrix configuration to permit a plurality of images having various angles or focal points to be input to the mobile terminal 100. As another example, the cameras 121 may be located in a stereoscopic arrangement to acquire left and right images for implementing a stereoscopic image.

The microphone 122 is generally implemented to permit audio input to the mobile terminal 100. The audio input can be processed in various manners according to a function being executed in the mobile terminal 100. If desired, the microphone 122 may include assorted noise removing algorithms to remove unwanted noise generated in the course of receiving the external audio.

The user input unit 123 is a component that permits input by a user. Such user input may enable the controller 180 to control operation of the mobile terminal 100. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. On the other hand, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like. The controller 180 generally cooperates with the sending unit 140 to control operation of the mobile terminal 100 or execute data processing, a function or an operation associated with an application program installed in the mobile terminal based on the sensing provided by the sensing unit 140. The sensing unit 140 may be implemented using any of a variety of sensors, some of which will now be described in more detail.

The proximity sensor 141 may include a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this case, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like).

In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data according to whether a touch with respect to a point on the touch screen is either a proximity touch or a contact touch.

A touch sensor can sense a touch applied to the touch screen, such as display unit 151, using any of a variety of touch methods. Examples of such touch methods include a resistive type, a capacitive type, an infrared type, and a magnetic field type, among others. As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 may sense which region of the display unit 151 has been touched. Here, the touch controller may be a component separate from the controller 180, the controller 180, and combinations thereof.

In some embodiments, the controller 180 may execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor.

Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

In some embodiments, the display unit 151 may be implemented as a stereoscopic display unit for displaying stereoscopic images.

A typical stereoscopic display unit may employ a stereoscopic display scheme such as a stereoscopic scheme (a glass scheme), an auto-stereoscopic scheme (glassless scheme), a projection scheme (holographic scheme), or the like.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like.

A signal output by the optical output module 154 may be implemented in such a manner that the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include one or more types of storage mediums including a Flash memory, a hard disk, a solid state disk, a silicon disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 may typically control the general operations of the mobile terminal 100. For example, the controller 180 may set or release a lock state for restricting a user from inputting a control command with respect to applications when a status of the mobile terminal meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various exemplary embodiments disclosed herein.

The power supply unit 190 receives external power or provide internal power and supply the appropriate power required for operating respective elements and components included in the mobile terminal 100. The power supply unit 190 may include a battery, which is typically rechargeable or be detachably coupled to the terminal body for charging.

The power supply unit 190 may include a connection port. The connection port may be configured as one example of the interface unit 160 to which an external charger for supplying power to recharge the battery is electrically connected.

As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable medium, a machine-readable medium, or similar medium using, for example, software, hardware, or any combination thereof.

Referring now to FIGS. 1B and 1C, the mobile terminal 100 is described with reference to a bar-type terminal body. However, the mobile terminal 100 may alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of mobile terminal (for example, bar-type, watch-type, glasses-type, and the like). However, such teachings with regard to a particular type of mobile terminal will generally apply to other types of mobile terminals as well.

The mobile terminal 100 will generally include a case (for example, frame, housing, cover, and the like) forming the appearance of the terminal.

In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information. As illustrated, a window 151a of the display unit 151 may be mounted to the front case 101 to form the front surface of the terminal body together with the front case 101.

In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121b or an audio output module 152b.

The cases 101, 102, 103 may be formed by injection-molding synthetic resin or may be formed of a metal, for example, stainless steel (STS), aluminum (Al), titanium (Ti), or the like.

As an alternative to the example in which the plurality of cases form an inner space for accommodating components, the mobile terminal 100 may be configured such that one case forms the inner space. In this example, a mobile terminal 100 having a uni-body is formed in such a manner that synthetic resin or metal extends from a side surface to a rear surface.

If desired, the mobile terminal 100 may include a waterproofing unit (not shown) for preventing introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

The mobile terminal 100 may be provided with the display unit 151, the 1st audio output unit 152a, the 2nd audio output unit 152b, the proximity sensor 141, the illumination sensor 142, the light output unit 154, the 1st camera 121a, the 2nd camera 121b, the 1st manipulating unit 123a, the 2nd manipulating unit 123b, the microphone 122, the interface unit 160, and the like.

FIGS. 1B and 1C depict certain components as arranged on the mobile terminal.

However, it is to be understood that alternative arrangements are possible and within the teachings of the instant disclosure. Some components may be omitted or rearranged. For example, the first manipulation unit 123a may be located on another surface of the terminal body, and the second audio output module 152b may be located on the side surface of the terminal body.

The display unit 151 outputs information processed in the mobile terminal 100. The display unit 151 maybe implemented using one or more suitable display devices.

Examples of such suitable display devices include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two display devices, which can implement the same or different display technology. For instance, a plurality of the display units 151 may be arranged on one side, either spaced apart from each other, or these devices may be integrated, or these devices may be arranged on different surfaces.

The display unit 151 may also include a touch sensor which senses a touch input received at the display unit. When a touch is input to the display unit 151, the touch sensor may be configured to sense this touch and the controller 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151a and a display on a rear surface of the window 151a, or a metal wire which is patterned directly on the rear surface of the window 151a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 1A). Therefore, the touch screen may replace at least some of the functions of the first manipulation unit 123a.

The first audio output module 152a may be implemented in the form of a speaker to output voice audio, alarm sounds, multimedia audio reproduction, and the like.

The window 151a of the display unit 151 will typically include an aperture to permit audio generated by the first audio output module 152a to pass. One alternative is to allow audio to be released along an assembly gap between the structural bodies (for example, a gap between the window 151a and the front case 101). In this case, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule notice, an email reception, information reception through an application, and the like. When a user has checked a generated event, the controller can control the optical output unit 154 to stop the light output.

The first camera 121a can process image frames such as still or moving images obtained by the image sensor in a capture mode or a video call mode. The processed image frames can then be displayed on the display unit 151 or stored in the memory 170.

The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may also employ any non-tactile method that allows the user to perform manipulation such as proximity touch, hovering, or the like.

FIG. 1B illustrates the first manipulation unit 123a as a touch key, but possible alternatives include a mechanical key, a push key, a touch key, and combinations thereof.

Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

As another example of the user input unit 123, a rear input unit (not shown) may be located on the rear surface of the terminal body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate it using a forefinger when the user grabs the terminal body with one hand. Alternatively, the rear input unit can be positioned at most any location of the rear side of the terminal body.

Embodiments that include the rear input unit may implement some or all of the functionality of the first manipulation unit 123a in the rear input unit. As such, in situations where the first manipulation unit 123a is omitted from the front side, the display unit 151 can have a larger screen.

As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123.

The microphone 122 is shown located at an end of the mobile terminal 100, but other locations are possible. If desired, multiple microphones may be implemented, with such an arrangement permitting the receiving of stereo sounds.

The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b is shown located at the rear side of the terminal body and includes an image capturing direction that is substantially opposite to the image capturing direction of the first camera unit 121a. If desired, second camera 121a may alternatively be located at other locations, or made to be moveable, in order to have a different image capturing direction from that which is shown.

The second camera 121b can include a plurality of lenses arranged along at least one line. The plurality of lenses may also be arranged in a matrix configuration. The cameras may be referred to as an "array camera." When the second camera 121b is implemented as an array camera, images may be captured in various manners using the plurality of lenses and images with better qualities.

As shown in FIG. 1C, a flash 124 is shown adjacent to the second camera 121b. When an image of a subject is captured with the camera 121b, the flash 124 may illuminate the subject.

As shown in FIG. 1B, the second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 may be retractable into the terminal body. Alternatively, an antenna may be formed using a film attached to an inner surface of the rear cover 103, or a case that includes a conductive material.

A power supply unit 190 for supplying power to the mobile terminal 100 may include a battery 191, which is mounted in the terminal body or detachably coupled to an outside of the terminal body. The battery 191 may receive power via a power source cable connected to the interface unit 160.

Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the terminal body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory is a touch pen for assisting or extending a touch input to a touch screen.

According to one embodiment of the present invention, it is proposed a controlling method for sharing a black image taken by a black box device provided to a car with another mobile terminal and an image sharing device for the same.

Particularly, according to one embodiment of the present invention, it is proposed that wireless communications such as a mobile communication and the like are used as a scheme for sharing an image.

In this case, the image sharing device may include a single device or may be configured in a manner that plural devices are connected to each other by wire/wireless communications and the like.

For instance, it may be possible to apply an embodiment of the present invention using a mobile terminal (e.g., a smartphone, etc.) connected by wireless to a black box device fixed to a car. The mobile terminal receives an image from the black box device or log information mentioned in the following description and may be able to exchange them with another mobile terminal or a server.

Since the black box device fails to be equipped with a mobile communication module in general, the black box device transceives that with a mobile terminal using the aforementioned short range communication (e.g., Zigbee, Wi-Fi, Bluetooth, etc.) and utilizes a mobile communication module of the mobile terminal for the data sharing with another device.

Moreover, the image sharing device may include a resident camera (e.g., CCTV, etc.) fixed to a specific location. Thus, in case of the resident camera fixed to the specific location, the image sharing device saves location information on the specific location in a memory and may be then able to send the location information to other devices.

According to an embodiment mentioned in the following description, a black box device for taking an image and a mobile terminal for sharing a taken black box image are separately described, by which the present invention is non-limited. That is, a case for a black box device for taking an image to directly share the image may correspond to an embodiment of the present invention. Each of the black box device and the mobile terminal may include the configuration described with reference to FIG. 1A entirely or in part.

Since a data size of a black box image is large in general, if all images taken through a black box device are shared, it may be inefficient in aspect of data resources. Hence, according to one embodiment of the present invention, it is proposed to search the taken images using log information corresponding to basic information of a black box image only and the search result is then shared only.

In this case, the log information is a sort of meta data information on a taken image and may include a shot time of the corresponding image, a shot location information of the corresponding image and the like.

Moreover, log information on a currently driven car may further include a driving speed of the car, a heading direction information of the car (on shooting), an information indicating whether it is an elevated road, an information indicating whether it is a highway or a normal road, an engine start state information of the car, an information indicating whether it is a children protection zone (e.g., a school zone, etc.), and the like.

Generally, when there is an elevated road, an image on the corresponding elevated road may be totally different from an image under the corresponding elevated road. Hence, if this is utilized as log information, it may be efficient to find a desired image.

In case that a normal road, a highway (e.g., a car-only road, etc.) and the like are distinguished from each other, when the corresponding roads are adjacent to each other, it may help to find a desired image.

Therefore, according to one embodiment of the present invention, when a black box device records a black box image, it is proposed to save log information on the recorded image as well (in a manner of matching the log information to the corresponding image). In particular, the black box image and the log information may be saved in a memory provided to the black box device or a memory of a mobile terminal. A connection between a black box device and an external memory may be established through a short range wireless communication (e.g., Bluetooth™, Zigbee, etc.), a cable and/or the like.

Meanwhile, in case that a separate location information module is not provided to a black box device, it may be able to receive a location information from a location information module of a connected mobile terminal.

For instance, if location information is received from a mobile terminal the moment an engine of a car stops, a location of the car is not changed until the engine of the car starts again. The location information received from the mobile terminal may be saved as log information of a black box image. In case of a smartphone, it may be able to check location information using a location history service of Google™ instead of a location information module.

As mentioned in the foregoing description, for an efficient use of a black box image, the log information should be shared with another user. That is, a person intending to check a presence of a taken image of an accident spot may be able to determine whether there is an image matching a corresponding place and a corresponding time using log information on a black box device. Hence, the demand for a control method of sharing these log information between users is rising.

According to the present invention, proposed are various methods as a controlling method for sharing log information.

As a 1^{st} method, proposed is a method of sharing log information by uploading them to a sharing server. A user intending to check an image may be able to check whether there is an image matching a corresponding place and a corresponding time by accessing the sharing server.

As a 2^{nd} method, proposed is a method of sharing log information between users of an application using a separate application in a mobile terminal without using a separate server.

As a 3^{rd} method, proposed is a method of sharing log information using an SNS (social network service) server. In the following description, two kinds of the methods are described in detail.

Method of Sharing Log Information Using Sharing Server is explained.

As mentioned in the foregoing description, a black box device can save a taken black box image in a memory together with log information. The black box device can upload the saved log information to a sharing server using a wireless communication unit of a mobile terminal.

That is, the mobile terminal can send the log information delivered from the black box device to the sharing server. According to one embodiment of the present invention, in case of starting/ stopping an engine of a car, it is proposed to determine a timing point of an upload by detecting the engine start/stop.

The black box device or the mobile terminal may be able to check whether the engine of the car is started using an OBD (on-board diagnostics) terminal of the car.

While a car is stopped or parked, a black box image may be saved together with log information. The black box image saved in this state shall be named a stop mode image. If it is detected that an engine of the car is started, a mobile terminal can upload the log information on the saved car-stop mode image to a sharing server.

While a car is driven, a black box image may be saved together with log information. The black box image saved in this state shall be named a driving mode image. If it is detected that an engine of the car is stopped, a mobile terminal can upload the log information on the saved driving mode image to a sharing server.

That is to say, the log information is collectively sent at the timing point of stopping/starting the engine. Since a size of data of the log information is not considerably large, data resources in case of sending the log information collectively can be used more efficiently than those in case of sending the log information by real time.

As mentioned in the foregoing description, it is able to upload log information at the timing point of starting/stopping an engine of a car. Yet, it may be possible to upload log information by real time.

That is to say, if log information is saved together with a stop or driving mode image, a mobile terminal can upload the corresponding log information instantly. If so, it may be advantageous in that log information saved in a sharing server can be updated by real time.

Although a mobile terminal is taken as one example of a main agent for uploading log information to a sharing server, it may be possible to upload log information using a wireless communication unit provided to a black box device. In this case, like the case that the mobile terminal is the main agent, the log information can be sent to the sharing server by real time or may be sent to the sharing server collectively at the timing point of starting/stopping an engine of a car.

Method of Sharing Log Information or Image Using Application is explained.

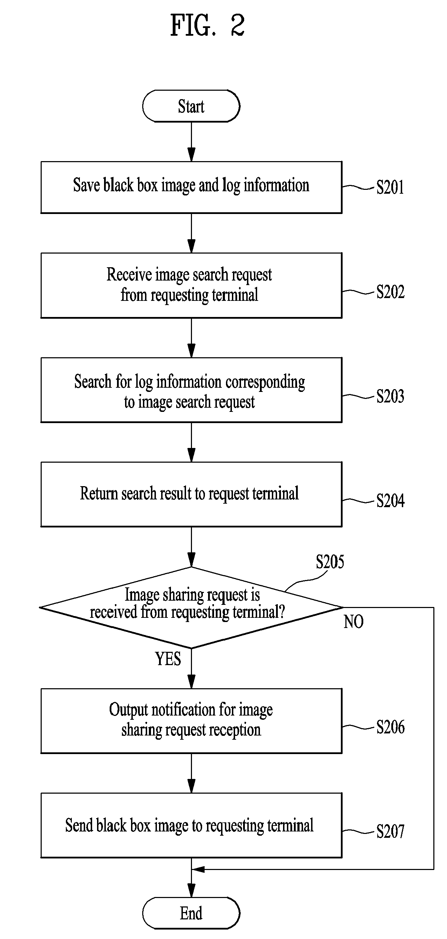

FIG. 2 is a flowchart for a controlling method of sharing log information using an application in an image sharer side terminal (hereinafter named a sharing terminal) according to one embodiment of the present invention.

Referring to FIG. 2, it is proposed to share log information and/or a black box image through an application installed on a mobile terminal. In doing so, the same application may be installed in an image requester side terminal (hereinafter named a requesting terminal) desiring to be provided with an image.

Referring to FIG. 2, in a step S201, a black box device can save black box image and log information together.

In a step S202, a sharing terminal may receive an image search request from a requesting terminal. Transmission/reception of data of the image search request and the like may be performed by a wireless communication between the sharing terminal and the requesting terminal. Preferably, the wireless communication may use a mobile communication network for example.

The image search request may be collectively sent to a plurality of sharing terminals having an application installed thereon instead of being sent to a single sharing terminal. In particular, each of a plurality of the sharing terminals individually searches whether log information corresponding to the received image search request exists [S203] and may be then able to send back a reply of a search result [S204]. If the log information corresponding to the search result does not exist, the replay may not be made.

In a step S205, the sharing terminal waits for an image sharing request from the requesting terminal. If the image sharing request is not received, the sharing terminal ends the routine of the flowchart. If the image sharing request is received, the sharing terminal goes to a step S206 and is then able to further output an alarm indicating that the image sharing request has been received.

In this case, the image sharing request may include a request for designating a specific image. That is to say, based on the search result received in the step S204, the requesting terminal specifies a desired image and is then able to make a request for sharing the specified image.

According to this method, a search for log information is preferentially requested to a sharing terminal and an image is then requested separately, without employing a separate sharing server. Hence, it may bring an effect that the log information is shared.

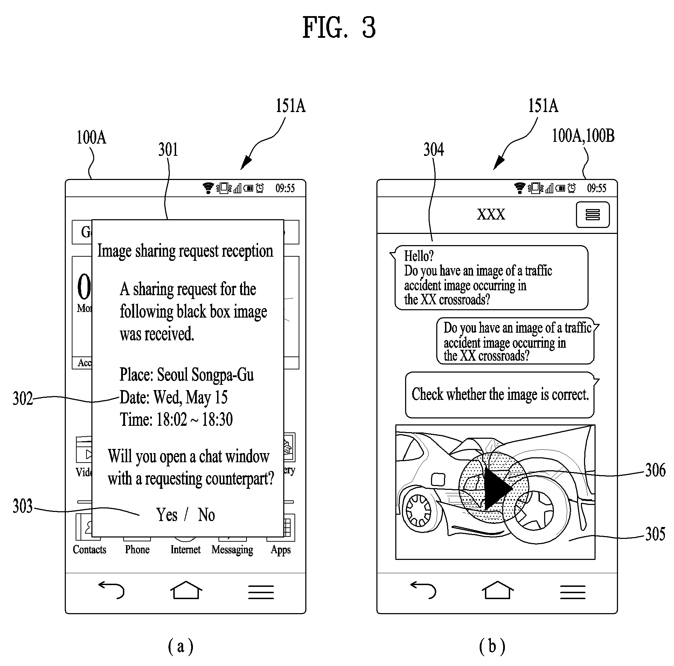

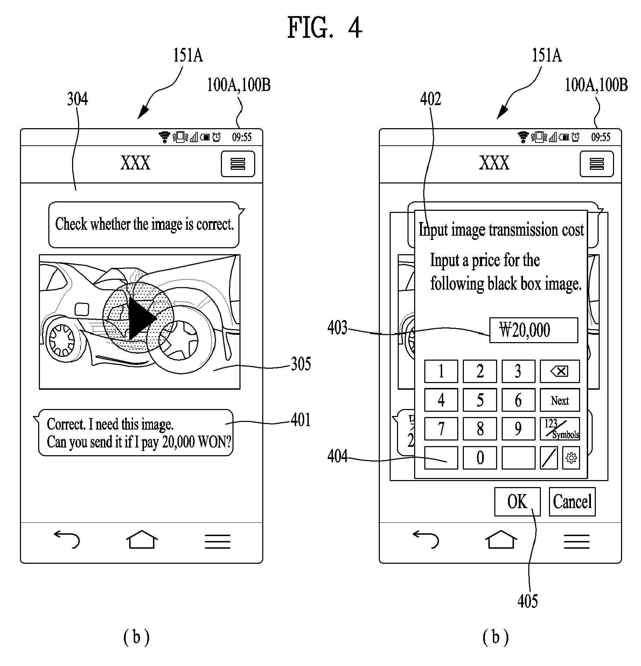

In a step S207, the black box image is sent to the requesting terminal. In doing so, a step of charging prescribed money to the requesting terminal before sending the black box image may be further included. Embodiments for the outputted alarm controlling method and the charging controlling method shall be described in detail with reference to FIG. 3 and FIG. 4.

FIG. 3 is a diagram for one example of a notification of an image sharing request for an image outputted from a sharing terminal according to one embodiment of the present invention.

According to one embodiment of the present invention mentioned in the following description, reference numbers for a sharing terminal shall be denoted in a manner of having 'A' attached thereto like 'controller 180A', 'touchscreen 151A' and the like, while reference numbers for a requesting terminal shall be denoted in a manner of having 'B' attached thereto like 'controller 180B', 'touchscreen 151B' and the like.

Referring to FIG. 3 (a), a notification 301 of an image sharing request is outputted through a touchscreen 151A of a sharing terminal 100A. In doing so, the notification 301 may be outputted, as shown in the drawing, in form of a popup window. Information 302 of a requested image may be contained in the outputted notification 301. A text for querying whether to open a chat window with a request counterpart and a confirmation region 303 for receiving an input of user's confirmation can be outputted.

If Yes (Y) is selected from the confirmation region 303 shown in FIG. 3 (a), a controller 180A can output a chat window 304 for transceiving text messages with a requesting terminal as shown in FIG. 3 (b).

Meanwhile, according to the embodiments described with reference to FIG. 3 and FIG. 4, a price is negotiated between the concerned parties through a chat window and a corresponding image is then shared at the amount of the negotiated price, by which the present invention is non-limited.

According to another embodiment, after a user of a sharing terminal 100A has preset an amount, if an image is shared at the preset amount, a payment and sharing process can be performed directly without opening a chat window.

According to one embodiment of the present invention, it is proposed not to share personal informations or contacts except the chat window. As mentioned in the following description, if a payment for an image transmission is made through the chat window and a requested image is sent, it is not necessary to share personal informations.

Referring to FIG. 3(b), according to one embodiment of the present invention, the sharing terminal 100A can send a preview data 305 for a requested image through the chat window 304. The preview data 305 may include one of an image for a portion of a play time of the image enough for a user of the requesting terminal 100B to check the image only, a low quality image of the image and an image having special effect applied to the corresponding image. In this case, the special effect may include a mosaic effect on the corresponding image for example.

The user of the requesting terminal 100B checks the preview data 305 and may be then able to determine whether to accept the sharing of the corresponding image. If it is determined that the corresponding image is a necessary image, the user of the requesting terminal 100B may be able to make a request for an original image or an image of quality higher than that of the preview data 305 to the user of the sharing terminal 100A.

FIG. 4 is a diagram for a controlling method of setting a price of an image transmission through the outputted chat window according to one embodiment of the present invention.

According to one embodiment of the present invention related to FIG. 4, for example, a negotiation of a payment amount and a corresponding payment of the negotiated amount are performed through the chat window, by which the present invention is non-limited. According to another embodiment of the present invention, the negotiation and payment can be performed by methods other than that mentioned in the above description.

FIG. 4 (a) and FIG. 4 (b) show running states of a touchscreen 151A of the sharing terminal 100A.

Referring to FIG. 4 (a), after the user of the requesting terminal 100B has checked an image through the preview data 305, the user of the requesting terminal 100B may make a request for sending the image to the user of the sharing terminal 100A through a text message on the chat window.

Referring to FIG. 4 (b), the sharing terminal 100A can output a screen 402 for an image transmission amount input. This screen 402 may output an amount input window 403 and a numeral keypad 404 together. After a desired amount has been inputted through the numeral keypad 404, if a confirm button 405 is selected, the controller 180A can send a set amount to the requesting terminal 100B. Thereafter, the requesting terminal 100B outputs a payment window corresponding to the set amount and may then make progress of the payment.

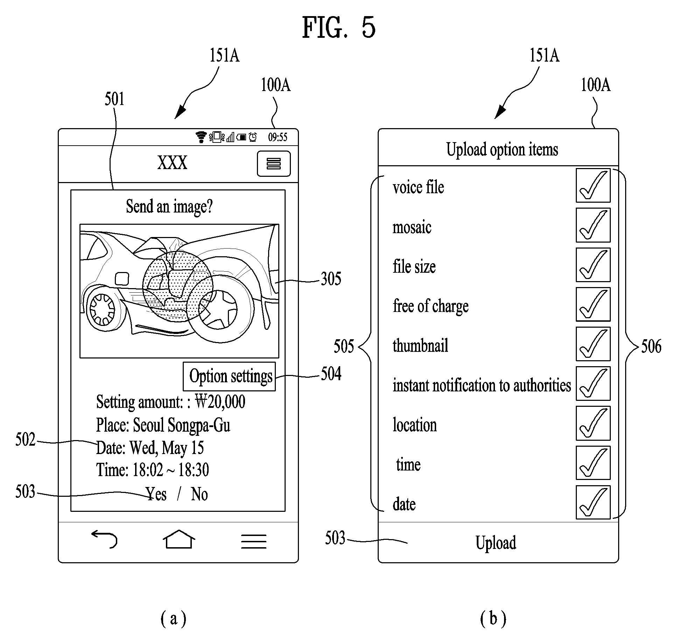

Meanwhile, according to one embodiment of the present invention, in case of delivering the image, the sharing terminal 100A performs a deletion editing (e.g., mosaic processing, etc.) on shop names, pedestrians' faces and the line contained in the image according to the upload settings and is then able to send the corresponding image. In the following description, a method of controlling image editing settings in sending an image is described in detail with reference to FIG. 5.

FIG. 5 is a diagram to describe an image transmitting option controlling state according to one embodiment of the present invention.

Referring to FIG. 5 (a), the sharing terminal 100A can output a popup window 501 for checking an image transmission through the touchscreen 151A. In this case, the popup window 501 may include a preview screen 305, an information 502 of an image to be transmitted, and a confirmation region 503.

Moreover, according to one embodiment of the present invention, the popup window 501 is proposed to further include an option setting button 504.

Referring to FIG. 5 (b), if an input for selecting the option setting button 504 is received, the controller can output a setting item list 505 and at least one check box 506.

Items included in the setting item list 505 may include at least one of 'voice file', 'mosaic', 'file size', 'free of charge', 'thumbnail', 'instant notification to authorities', 'location', 'time', and 'date'. Settings of the items are described in detail as follows.

First of all, the item 'voice file' is the item for setting whether to send a voice file together.

The item 'mosaic' is the item for setting whether to perform a mosaic image processing on a portion of an image selected by a user or a portion of an image determined by the controller 180A.

The item 'file size' is the item for selecting whether to send a compressed file or an original copy. If a size of an image can be set through the item 'file size', a sharer may be able to make a request for an amount differential in accordance with a file size to a requester.

The item 'free of charge' is the item for setting an amount for an image offer to free or pay.

The item 'thumbnail' indicating whether to offer a thumbnail is the item for setting whether to send a thumbnail photo together in offering a black box image.

The item 'instant notification to authorities' is the item for setting whether to report user's witness of an emergency to the authorities. This is to solve a case of a corresponding accident or incident quickly by reporting it instantly.

The items 'location', 'time' and 'date' are the items for setting whether to send a log information of a taken image together.

After each of the items has been set by selecting a corresponding checkbox each for example, if an upload button 503 is selected, the sharing terminal 100A can send an image to the requesting terminal 100B by reflecting the settings of the corresponding items.

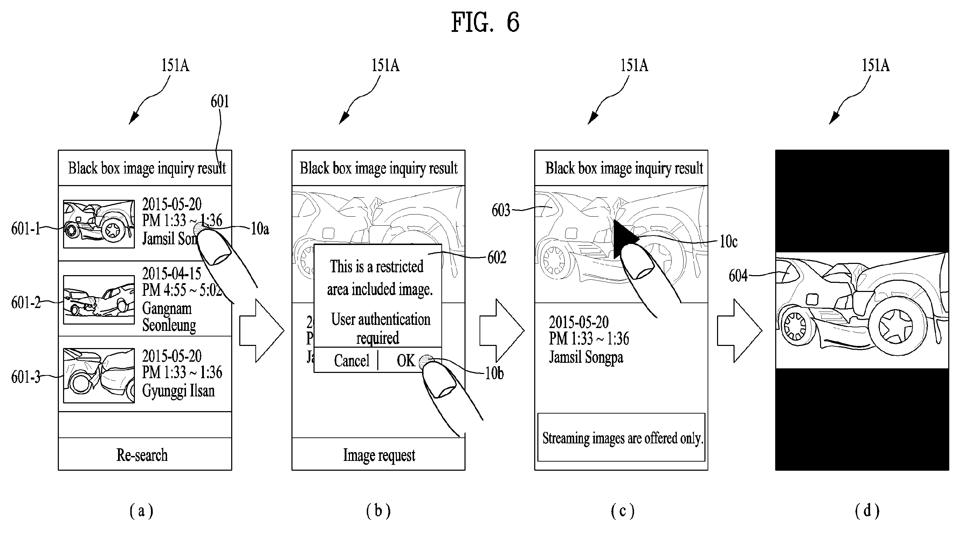

Meanwhile, according to one embodiment of the present invention, it is proposed that a black box image recorded in a specific area can be viewed by the concerned persons or parties only. The reason for this is that the black box image can play a role as personal information indicating a moving route of a user. This is described in detail with reference to FIG. 6 as follows.

FIG. 6 is a diagram for a controlling method of restricting a view of a black box image taken in a specific shadow area according to one embodiment of the present invention.

Referring to FIG. 6 (a), a black box image list 601 is outputted through the touchscreen 151A of the sharing terminal 100A. In the outputted black box image list 601 shown in the drawing, first to third image items 601-1 to 601-3 are included. And, log information of each image is outputted together as well.

In doing so, assume that a shot location of the first image item 601-1 is a shadow area. In this case, the shadow area may mean an image sharing impossible area such as a possible privacy infringement area (e.g., hotel/motel area, etc.), an unauthorized person visit prohibited area (e.g., military base, Blue House, etc.) in association with national security, or the like. An image of such area should not be shared with other persons. And, the concerned persons or parties are preferably allowed to view or read an image of such area.

If a selection 10a of the first image item 601-1 is made, the sharing terminal 100A can output a guide text 602 indicating a restricted area. After user authentication has been performed, if a selection 10b of a confirm button is made, the controller 180A can output a preview screen 603 for the selected first image item 601-1. If a selection 10c of a play button is made, the controller 180A can output a play screen 604 of a corresponding image.

According to one embodiment of the present invention, it is proposed that a black box image taken or recorded in such a shadow area cannot be saved separately. As mentioned in the foregoing description, it may increase the risk of personal privacy infringement, national security or the like.

As shown in FIG. 6 (d), restrictions can be put on a corresponding image in a manner that the corresponding image is playable only but is not downloadable to other terminals.

Sharing Log Information or Black Box Image Using SNS Server is described.

Recently, various SNS servers are provided to users for free. In particular, a user pays no money in using SNS. Hence, according to one embodiment of the present invention, proposed is a method of utilizing an SNS server offered for free without managing and operating a separate sharing server.

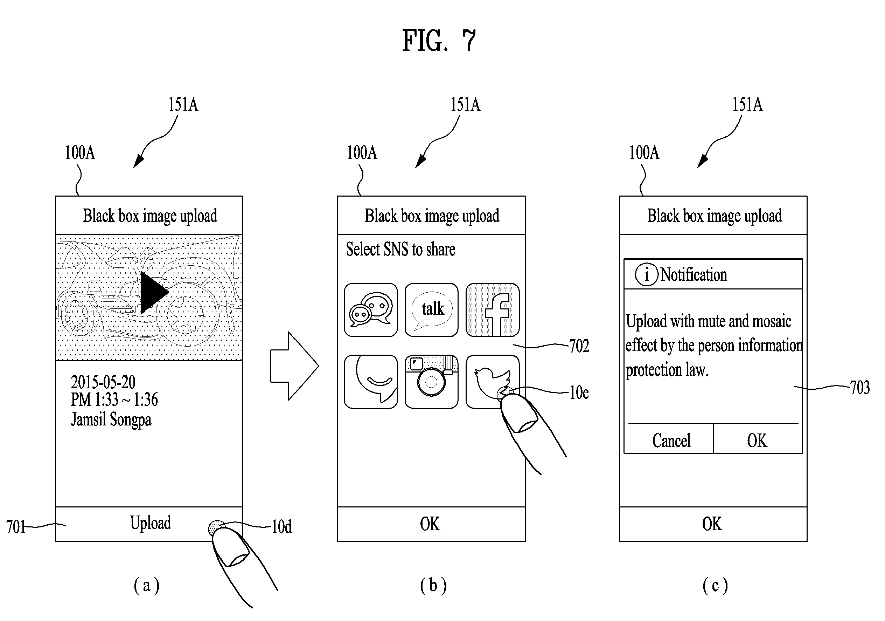

That is to say, when log information is uploaded, a volume of the data of the log information is not much. Therefore a considerable quantity of user information can be managed or handled at a time. Such an embodiment is described in detail with reference to FIGs. 7 to 9 as follows.

FIG. 7 is a diagram for a controlling method of uploading a black box image to an SNS server according to one embodiment of the present invention.

Referring to FIG. 7(a), if a selection 10d of an upload button 701 for uploading a specific black box image is made, the sharing terminal 100A can output an SNS list 702 as shown in FIG. 7 (b).

Meanwhile, according to one embodiment of the present invention, an SNS server may include a server of SNS of a message transmission/reception type as well as a server of SNS of a posting registration type. In particular, using an application capable of transceiving messages with a plurality of counterpart terminals, log information is uploaded on the basis of an individual sharing method of the corresponding application. And, an image can be then shared with a requesting terminal based on the corresponding log information.

If a selection 10e of a prescribed SNS from the outputted SNS list 702 as shown in FIG. 7 (b), the sharing terminal 100A can upload the specific black box image to the selected SNS server. In doing so, if it is necessary to log in to the SNS, a log-in screen is additionally outputted and the specific black box image and the log information can be then uploaded using a log-in account. If a previous login is currently maintained, the specific black box image and the log information can be uploaded using an account of the previous log-in.

Thus, if the log information and image are uploaded using the SNS server, the corresponding log information or the corresponding image can be set to be read or viewed only by a user registered as a friend at the SNS in accordance with the public settings.

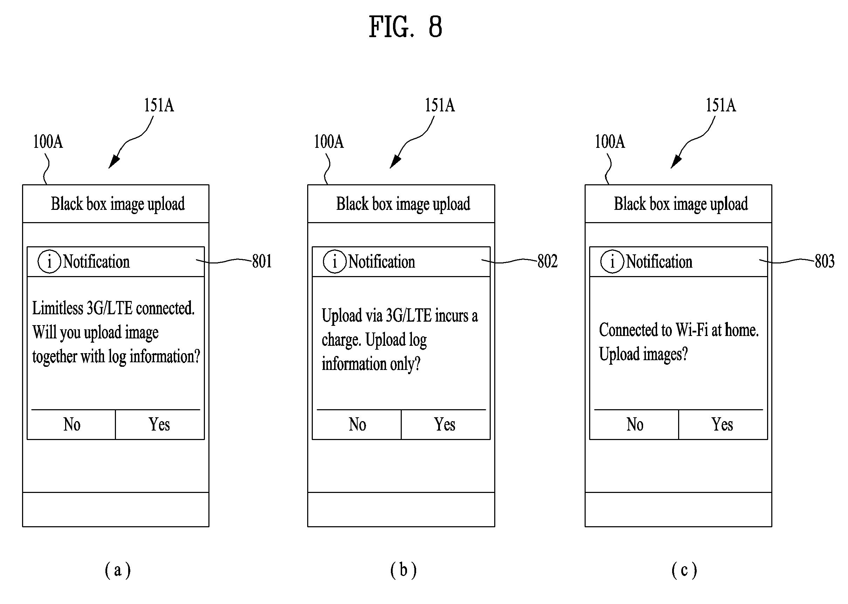

Meanwhile, according to one embodiment of the present invention, it is proposed to differentiate an uploading timing point in accordance with a wireless communication condition. Such an embodiment is described in detail with reference to FIG. 8 as follows.

FIG. 8 is a state diagram for a controlling method of differently setting an uploading timing point in accordance of a wireless communication condition according to one embodiment of the present invention.

Referring to FIG. 8, on the condition that is irrespective of a data use quantity in using a mobile communication network per communication service provider, it may be able to upload a specific black box image at a timing point as soon as possible without considering other situations.

Referring to FIG. 8 (a), if an image upload command is received, the sharing terminal 100A can output a guide text 801 indicating that an image is uploaded together with log information.

On the condition that a charge is made in accordance with a data use quantity, log information having a small data size is uploaded in the first place and a black box image is then uploaded in case of connection to a free wireless communication such as Wi-Fi or the like.

Referring to FIG. 8 (b), if an image upload command is received, the sharing terminal 100A can output a guide text 802 indicating that log information is uploaded only. Thereafter, if a connection to a free wireless communication such as Wi-Fi or the like is established as shown in FIG. 8(c), the sharing terminal 100A can output a guide text 803 indicating that an image is uploaded.

If log information has been uploaded only, before a corresponding black box image is uploaded, a user of an external terminal reads the corresponding log information only and may be then able to send a message for requesting the corresponding image to the sharing terminal.

Meanwhile, if a black box image recorded in the aforementioned shadow area is uploaded, there is the risk of uploading the black box image in a situation that a user fails to recognize the upload.

Therefore, according to one embodiment of the present invention, if a black box image recorded in the shadow area is uploaded to an SNS server, it is proposed to automatically perform a mosaic processing on the image.

FIG. 7 (c) shows a state that a text 703 indicating that the mosaic processing has been performed is currently outputted.

According to one embodiment of the present invention, it is further proposed to directly upload a black box image to a public institution server. The reason for this is that a black box image is available for the public use depending on how to utilize the corresponding image.

For instance, according to one embodiment of the present invention, when an accident is witnessed, the sharing terminal 100A can directly upload a black box image and log information to an institution (e.g., police station, fire station, medical facility, etc.) responsible for road traffic.

So, the responsible institution can obtain a scale or circumstances of a corresponding accident through the uploaded black box image and may be then able to quickly dispatch manpower and equipments appropriate for the accident to the accident scene.

Moreover, if the image uploaded to the SNS or responsible institution is checked by real time, a car behind the accident scene can be quickly determined to detour a bottleneck section, a congested section and the like which will occur due to the corresponding accident.

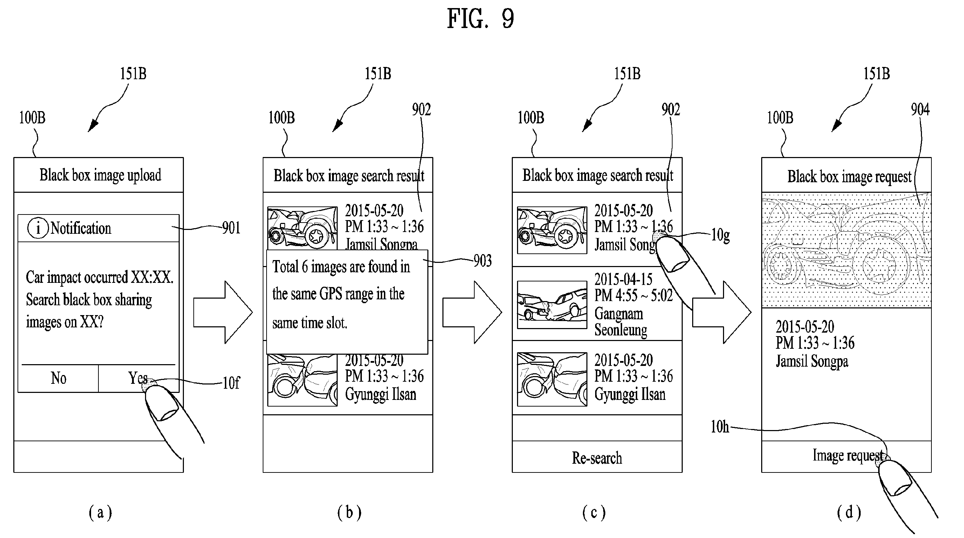

A method of controlling the requesting terminal 100B downloading a black box image uploaded to an SNS server or the like by the former method mentioned in the above description is described in detail with reference to FIG. 9 as follows.

FIG. 9 is a state diagram for a controlling method of a requesting terminal 100B automatically receiving a download of a black box image uploaded to an SNS server according to one embodiment of the present invention.

Referring to FIG. 9, if a black box device is not installed in a car of a user, when a traffic accident occurs, black box images of other users may become further important for the police or insurance company investigations. Although the black box device is installed in the user's car, images viewed in different angles or images of blind spots may be necessary.

Therefore, according to one embodiment of the present invention, in case that a car detects impact or shock, it is proposed to automatically search black box images uploaded to an SNS server and to automatically download the found black box images.

According to one embodiment of the present invention, the controller 180B of the requesting terminal 100B can detect an impact on a car. In this case, the impact on the car may be sensed through a sensing unit of the requesting terminal 100B or a sensing unit of a black box device.

For instance, if it is detected that an acceleration variation of an acceleration sensor included in the sensing unit is equal to or greater than a prescribed numerical value, it can be detected that the car was impacted.

Alternatively, an ECU (electronic control unit) of the car senses the impact on the car and the detected impact on the car may be delivered to the black box device or the mobile terminal through an OBD terminal.

Referring to FIG. 9 (a), once the impact on the car is detected, it is able to output a text 901 indicating that the car impact has been detected. Alternatively, if it is detected that an engine of the car starts again, the guide text 901 can be outputted.

If an input 10f for searching shared images is received through the outputted guide text from the user, the controller 180B, accesses the SNS server, searches for the images at the same place in the same time slot, and is then able to output a search list 902 of the found black box images as shown in FIG. 9 (b).

Thus, when images are searched, the corresponding search work is facilitated using log information saved together with the corresponding black box image. Together with the search list 902, as shown in FIG. 9 (b), it may be able to output a popup window 903 indicating the number of search results.

Referring to FIG. 9(c), if a selection 10g of a prescribed item from the search list 902 is made, the controller 180 can output a preview screen 904 for the selected image. If a selection 10h of an image request button is made, the requesting terminal 100B can download the selected image from the SNS server.

According to the embodiment described with reference to FIG. 9, a black box image is assumed as shared through a sharing server, by which the present invention is non-limited.

For instance, if an impact on a car is detected, the requesting terminal 100B detects a current location of the car and then automatically searches for black box devices adjacent to the car. The requesting terminal 100B may be then able to automatically send an image sharing request to the device(s) capable of sharing black box image(s) among the found black box devices.

In doing so, when the requesting terminal 100B makes the image sharing request, the requesting terminal 100B may also send a request for sharing the black box image amounting to a coverage ranging from 1 minute before an accident impact timing point to 2 minutes after the accident impact timing point by delivering the accident impact timing point.

In doing so, as mentioned in the foregoing description, it is also able to make request for a prescribed amount of money as a price for sharing the black box image.

According to the embodiment mentioned in the foregoing description, in case that an impact on a car is detected, images taken around the car are collected. On the other hand, in case that an impact on a car is detected, a controlling method of automatically uploading an image taken by the impacted car to an SNS server is described in detail with reference to the accompanying drawing as follows.

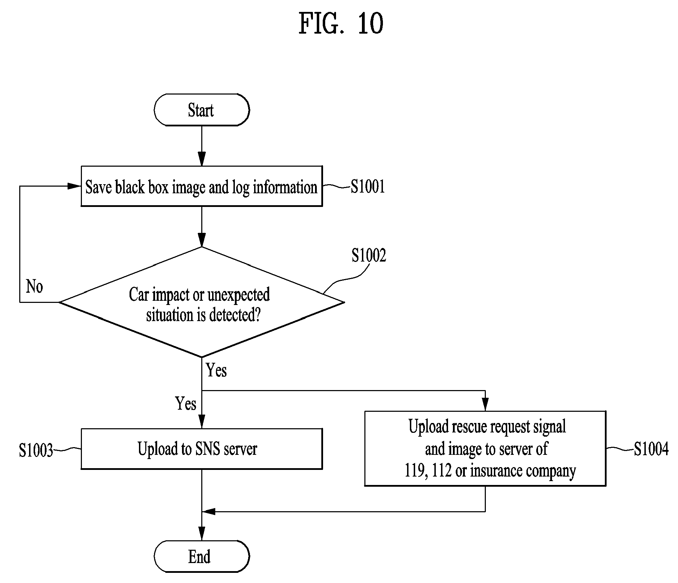

FIG. 10 is a flowchart for a controlling method of automatically uploading a black box image to a prescribed server in case of detecting an impact on a car or other unexpected situation according to one embodiment of the present invention.

Referring to FIG. 10, in a step S1001, the sharing terminal 100A can save black box image and log information. In this case, the log information is identical to that mentioned in the foregoing description.

In a step S1002, the sharing terminal 100A checks whether an impact on a car or an unexpected situation is detected. If an impact on a car or an unexpected situation is not detected, the sharing terminal 100A goes back to the step S1001 and continues to save the black box image and the log information.

According to one embodiment of the present invention, the unexpected situation may include a situation that an object unexpectedly appears in a currently taken black box image, a situation that a crash sound is heard, or the like.

That is to say, while the controller 180 monitors a currently taken or recorded black box image, the controller 180 may detect an unexpected appearance of an object or a rapid increase of a strength of an audio signal received through the microphone 122 (e.g., a case that the strength exceeds a prescribed numerical value, etc.).

If the impact on the car or the unexpected situation is detected in the step S1002, the sharing terminal 100A can upload a most recently taken black box image and corresponding log information to an SNS server [S1003].

For example, the most recently taken black box image may include an image amounting to a coverage ranging from 1 minute before the detection of the impact on the car to 1 minute after the detection of the impact on the car for example. And then, the sharing terminal 100A may upload both a rescue request signal and a black box image to such rescue institutions as 119 (i.e., fire station), 112 (i.e., police station), an insurance company, and the like.

According to the above-described embodiment, as a black box image is automatically uploaded, the fire station '119' checks the uploaded black box image. As a result of the check, if there are emergency patients, the fire station quickly dispatches an ambulance to minimize the casualties.

Moreover, the police station '112' or the insurance company sends necessary manpower to the accident scene to quickly control the accident scene and to prevent damage from being caused collaterally.

Furthermore, since another SNS user having checked the image uploaded to the SNS server can recognize the scale of the accident in the corresponding area, additional traffic accidents can be prevented and the SNS user can be guided to an entry into a detour road.

Referring to FIGs. 2 to 8, the state diagrams of the sharing terminal 100A are shown. An embodiment for the requesting terminal 100B to make a request for a black box image is described in detail with reference to the accompanying drawing as follows.

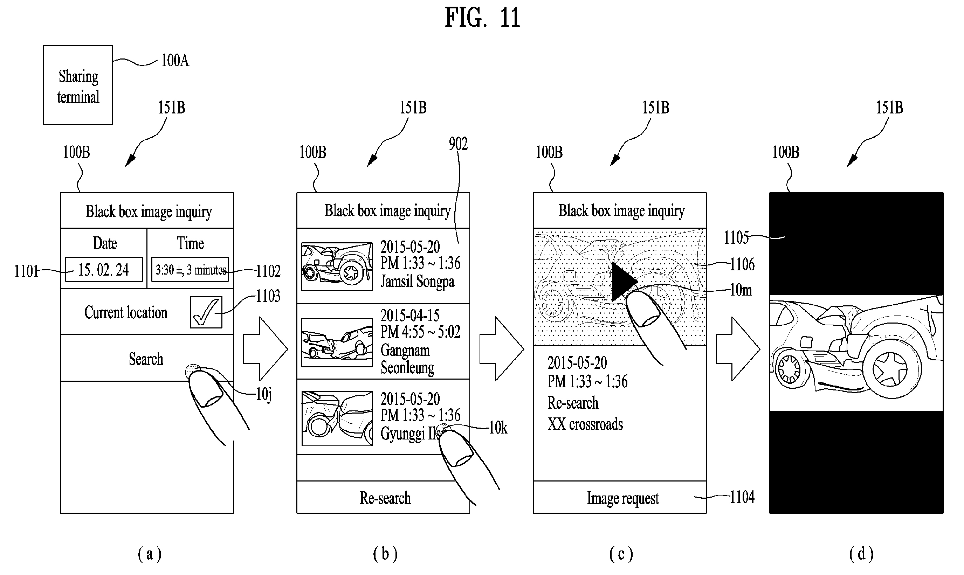

FIG. 11 is a diagram of a controlling method for a requesting terminal 100B to make a request for a black box image to at least one sharing terminal 100A by designating a time and place according to one embodiment of the present invention.

Referring to FIG. 11 (a), a date input window 1101, a time input window 1102 and a location selecting box 1103 are included in an image search state diagram.

As mentioned in the foregoing description, according to one embodiment of the present invention, using log information saved together with a black box image, the black box image can be easily shared with a plurality of black box devices or a mobile terminal.

Referring FIG. 11(a), if a time, date and location are designated through the date input window 1101, the time input window 1102 and the location selecting box 1103, the requesting terminal 100B can send a black box image request signal to at least one sharing terminal 100A (or a sharing server) based on the designated time, data and location.

Meanwhile, according to one embodiment of the present invention, the requesting terminal 100B saves the time and date and/or the location for detecting an impact and is then able to automatically input the designated time and date and/or the designated location to the date input window 1101, the time input window 1102 and the location selecting box 1103.

That is, after a timing point of an occurrence of an accident has been automatically inputted, if a user's modification is desired, it may be able to modify a time and date or a location in response to a modification request.

Referring to FIG. 11 (a), if an input of a selection 10j from the user is received, the requesting terminal 100B can execute to search the accident images.

Referring to FIG. 11(b), in response to the black box image request signal, the requesting terminal 100B having received the image search result is able to output an image search result list 902.

Referring to FIG. 11 (c), if an input of a selection 10k of a prescribed item from the list 902 is received, the requesting terminal 100B is able to output a preview screen 1106 of the selected image.

Referring to FIG. 11 (d), if a selection 10m of a play button on the preview screen 1106 is made, the requesting terminal 100B may be able to output a play screen 1105 of the corresponding image.

Meanwhile, if an image request button 1104 is selected in FIG. 11 (c), it may be able to open a chat window referring to FIG. 3 provided to make a request for sharing the corresponding black box image to the sharing terminal 100A corresponding to the selected image.

Thus, as mentioned in the foregoing description, the opened chat window is set to block personal information of each counterpart, whereby the personal informations can be protected.

Effective Utilization of Log Information is described.

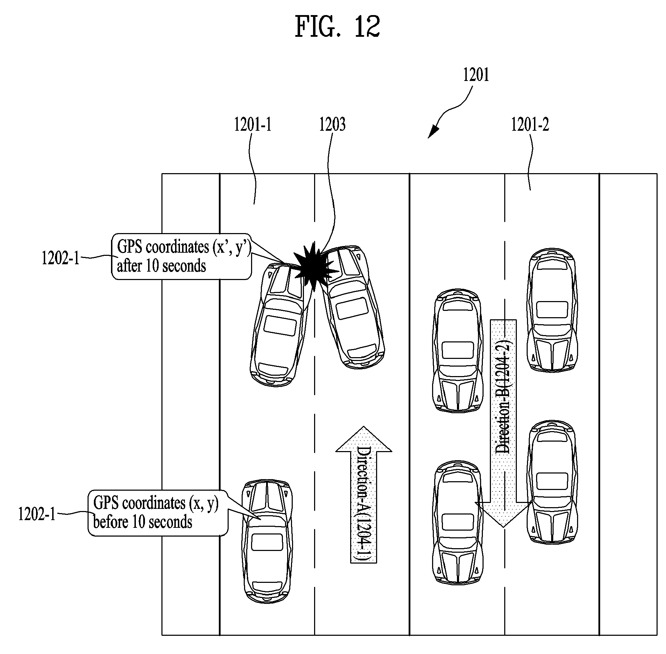

According to one embodiment of the present invention, it is proposed to determine a moving direction of a car based on location information included in log information. Such an embodiment is described in detail with reference to FIG. 12 as follows.

First of all, in an area where U-turn is difficult like a highway, in case that information on the up and down lanes is not clear, it may possibly take a long time to clean up a corresponding accident. Therefore, when an accident occurs, since a golden time for an emergency is missed, it may possibly cause a secondary accident or damage of human life.

According to one embodiment of the present invention, it is proposed to determine a moving direction of a car using two location informations at different timing points and to determine whether an accident occurs on the up lanes or the down lanes.

FIG. 12 is a conceptual diagram to describe a controlling method of determining a heading direction of a car based on location information according to one embodiment of the present invention.

Referring to FIG. 12, a road 1201 is divided into the up lanes 1201-1 and the down lanes 1201-2. A car moving direction on the up lanes 1201-1 is a direction-A 1204-1 and a car moving direction on the down lanes 1201-2 is a direction-B 1204-2.

Assume that a car accident 1203 occurs on the up lanes 1201-1 in the direction-A 1204-1. Comparing GPS coordinates 1202-2 before 10 seconds and GPS coordinates 1202-1 after 10 seconds to each other, it can be observed that a car has moved in the direction-A 1204-1.

Therefore, according to one embodiment of the present invention, based on the location information included in the log information mentioned in the foregoing description, whether a moving direction of the car is the up lanes or the down lanes. When a rescue signal is delivered to an institution based on the result of the determination, information indicating whether a moving direction of the car is the up lanes or the down lanes can be delivered as well.

Moreover, according to one embodiment of the present invention, information indicating a place close to a school is further included in the log information. If the additional log information is used, it may be effective in filtering a desired black box image.

That is to say, a user further sets information indicating that a desired black box image corresponds to a place close to a school and is then able to send an image request signal containing the corresponding setting.

Meanwhile, an operation capability of a processor installed in a black box device is generally lower than that of a processor of another device (e.g., a smartphone, a notebook computer, etc.) connectible to the black box device.

Therefore, while a black box device is connected to another device, if the processor having better operation capability is used, it may bring an efficient result.

For instance, if the processor having better operation capability is used, an image recorded in the black box device can be analyzed more efficiently. Therefore, according to one embodiment of the present invention, in case of analyzing a black box image by real time, it is proposed to use a processor of a mobile terminal connected to a black box device.

According to LDWS (lane departure warning system), it is determined whether a car leaves a car lane in the course of being driven by analyzing a black box image. If the car leaves the corresponding car lane irrespective of driver's intention, it is able to prevent an accident by giving a warning to the driver.

An image recorded by the black box device is sent to a mobile terminal. Subsequently, if the mobile terminal analyzes the corresponding image and then determines that the car has left the car lane, it may be able to execute the functions of the system using a processor having a better operation capability.

If the car leaves the car lane due to the driver or an obstacle is detected, it may be able to reduce the risk of accident by outputting a warning through the mobile terminal.

Moreover, if the black box device malfunctions, it may be possible to send a warning to the mobile terminal connected to the black box device.

The above-described methods can be implemented in a program recorded medium as computer-readable codes. The computer-readable media may include all kinds of recording devices in which data readable by a computer system are stored. The computer-readable media may include HDD (hard disk drive), SSD (solid state disk), SDD (silicon disk drive), ROM, RAM, CD-ROM, magnetic tapes, floppy discs, optical data storage devices, and the like for example and also include carrier-wave type implementations (e.g., transmission via Internet). Further, the computer may include the controller 180 of the terminal. It will be appreciated by those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A terminal, comprising:
a wireless communication unit;
a camera;
an output unit;
a memory; and
a controller configured to:
cause the memory to store an image received via the camera and log information;
receive an image sharing request from an external terminal via the wireless communication unit; and
cause the output unit to output a notification notifying the receiving of the image sharing request when the stored log information includes information corresponding to the received image sharing request.

2. The terminal of claim 1, wherein the controller is further configured to cause the wireless communication unit to establish a session for sharing an image with the external terminal.

3. The terminal of claim 2, wherein the controller is further configured to cause the wireless communication unit to:
transmit a payment request for the image corresponding to the received image sharing request to the external terminal via the established session; and
transmit the image corresponding to the received image sharing request to the external terminal via the established session when a payment is made in response to the payment request.

4. The terminal of claim 2, wherein:
the controller is further configured to cause the wireless communication unit to transmit preview data of the image corresponding to the received image sharing request to the external terminal via the established session; and
the preview data comprises one selected from the group consisting of a portion of a the image corresponding to the received image sharing request, a low quality image of the image corresponding to the received image sharing request, and a modified image created by applying a special effect to the image corresponding to the received image sharing request.

5. The terminal of claim 4, wherein:
the controller is further configured to cause the wireless communication unit to transmit the image corresponding to the received image sharing request to the external terminal with the special effect applied thereto; and
the special effect comprises an effect of automatically performing a mosaic processing on a signboard or a human face included in the image.

6. The terminal of claim 1, wherein the log information comprises at least one selected from the group consisting of shot time information of the received image, shot location information of the received image, an engine start/stop status of a prescribed car, information indicating whether a road is elevated, information indicating whether the road is a highway or a normal road, and moving direction information on shooting.

7. The terminal of claim 1, wherein the controller is further configured to cause the wireless communication unit to transmit at least one log information corresponding to the received image sharing request to the external terminal when the stored log information includes the at least one log information corresponding to the received image sharing request.

8. The terminal of claim 1, further comprising a sensing unit configured to sense an impact on a car, wherein the controller is further configured to cause the wireless communication unit to automatically upload an image received at a timing point of sensing the impact to a server in response to the sensed impact on the car.

9. A terminal, comprising:
a touchscreen;
a wireless communication unit;
a user input unit; and
a controller configured to:
set a place and a time according to user input received via the user input unit;
cause the wireless communication unit to transmit an image search request corresponding to the set place and time to at least one external terminal; and
cause the touchscreen to display an image search result received from the at least one external terminal in response to the image search request.

10. The terminal of claim 9, wherein the controller is further configured to cause the wireless communication unit to establish a session for sharing an image with the at least one external terminal in response to an input for designating the image in the image search result, the input received via the user input unit.

11. A method for controlling a terminal, the method comprising:
storing an image received via a camera and log information;
receiving an image sharing request from an external terminal via a wireless communication unit; outputting a notification notifying the receiving of the image sharing request via an output unit when the stored log information includes information corresponding to the received image sharing request
establishing a session for sharing an image with the external terminal;
transmitting a payment request for the image corresponding to the received image sharing request to the external terminal via the established session; and
transmitting the image corresponding to the received image sharing request to the external terminal via the established session when a payment is made in response to the payment request.

12. The method of claim 11, further comprising transmitting a preview data for the image to the external terminal via the established session, wherein the preview data comprises one selected from the group consisting of a portion of a the image corresponding to the received image sharing request, a low quality image of the image corresponding to the received image sharing request, and a modified image created by applying a special effect to the image corresponding to the received image sharing request,
wherein the preview data comprise the image corresponding to the received image sharing request with the special effect applied thereto; and
the special effect comprises an effect of automatically performing a mosaic processing on a signboard or a human face included in the image.

13. The method of claim 11, wherein the log information comprises at least one selected from the group consisting of shot time information of the received image, shot location information of the received image, an engine start/stop status of a prescribed car, information indicating whether a road is elevated, information indicating whether the road is a highway or a normal road, and moving direction information on shooting.

14. The method of claim 11, further comprising transmitting at least one log information corresponding to the received image sharing request to the external terminal when the stored log information includes the at least one log information corresponding to the received image sharing request.

15. The method of claim 11, further comprising:
sensing an impact on a car; and
automatically uploading an image received via the camera at a timing point of sensing the impact to a server in response to the sensed impact on the car.
